# FASCICULE DE BREVET EUROPEEN

(11) **EP 2 380 069 B1**
(45) Date de publication et mention de la délivrance du brevet: **27.02.2019**
(21) Numéro de dépôt: 09799176.4
(22) Date de dépôt: 18.12.2009
(51) Int. Cl.: G05F 1/67

(54) **SYSTÈME DE GESTION ÉLECTRONIQUE DE CELLULES PHOTOVOLTAIQUES**
ELEKTRONISCHES VERWALTUNGSSYSTEM FÜR PHOTOVOLTAIKZELLEN
ELECTRONIC MANAGEMENT SYSTEM FOR PHOTOVOLTAIC CELLS

(30) Priorité: 18.12.2008 FR 0807119
(43) Date de publication de la demande: 26.10.2011
(73) Titulaire: Centre National de la Recherche Scientifique, 75794 Paris Cedex 16 (FR); TOTAL MARKETING SERVICES, 92800 Puteaux (FR)
(72) Inventeur: VERMEERSCH, Marc, F-78110 Le Vésinet (FR); ESTIBALS, Bruno, F-31470 Saint Thomas (FR); ALONSO, Corinne, F-31520 Ramonville Saint Agne (FR)
(74) Mandataire: Croonenbroek, Thomas Jakob
(86) Numéro de dépôt international: PCT/IB2009/055852
(87) Numéro de publication internationale: WO 2010/070621

(56) Documents cités:
- WO-A-2008/062076
- WO-A-2008/125915
- DE-A1- 19 627 816
- US-A- 4 742 243
- US-A1- 2005 094 423
- US-A1- 2008 143 188
- VELASCO G ET AL: "Grid-connected PV systems energy extraction improvement by means of an Electric Array Reconfiguration (EAR) strategy: Operating principle and experimental results" POWER ELECTRONICS SPECIALISTS CONFERENCE, 2008. PESC 2008. IEEE, IEEE, PISCATAWAY, NJ, USA, 15 juin 2008 (2008-06-15), pages 1983-1988, XP031300257 ISBN: 978-1-4244-1667-7
- BLAABJERG F ET AL: "A Review of Single-Phase Grid-Connected Inverters for Photovoltaic Modules" IEEE TRANSACTIONS ON INDUSTRY APPLICATIONS, IEEE SERVICE CENTER, PISCATAWAY, NJ, US, vol. 41, no. 5, 1 septembre 2005 (2005-09-01), pages 1292-1306, XP011139229 ISSN: 0093-9994

## Description

La présente invention concerne le domaine des générateurs photovoltaïques et plus spécifiquement des modules photovoltaïques intégrant de l'électronique ; un tel module comprend un générateur photovoltaïque et un système de gestion électronique de cellules photovoltaïques.

De manière connue en soi, un générateur photovoltaïque (GPV) comprend une ou plusieurs cellules photovoltaïques (PV) reliées en série et/ou en parallèle. Dans le cas de matériaux inorganiques, une cellule photovoltaïque est essentiellement constituée d'une diode (jonction pn ou pin) composée à partir d'un matériau semi-conducteur. Ce matériau présente la propriété d'absorber de l'énergie lumineuse dont une part significative peut être transférée à des porteurs de charge (électrons et trous). La constitution d'une diode (jonction pn ou pin) par dopage de deux zones respectivement de type N et de type P - éventuellement séparées d'une région non dopée (appelée "intrinsèque" et désignée par "i" dans la jonction pin) - permet de séparer les porteurs de charge pour ensuite les collecter via des électrodes que comporte la cellule photovoltaïque. La différence de potentiel (tension de circuit ouvert, V_{oc}) et le courant maximal (courant de court-circuit, I_{cc}) que peut fournir la cellule photovoltaïque sont fonction à la fois des matériaux constitutifs de l'ensemble de la cellule et des conditions environnant cette cellule (dont l'éclairement au travers de intensité spectrale, la température,...). Dans le cas des matériaux organiques, les modèles sont sensiblement différents - faisant davantage référence à la notion de matériaux donneurs et accepteurs dans lesquels sont créés des paires électron-trou appelées excitons. La finalité demeure la même : séparer les porteurs de charge pour collecter et générer un courant.

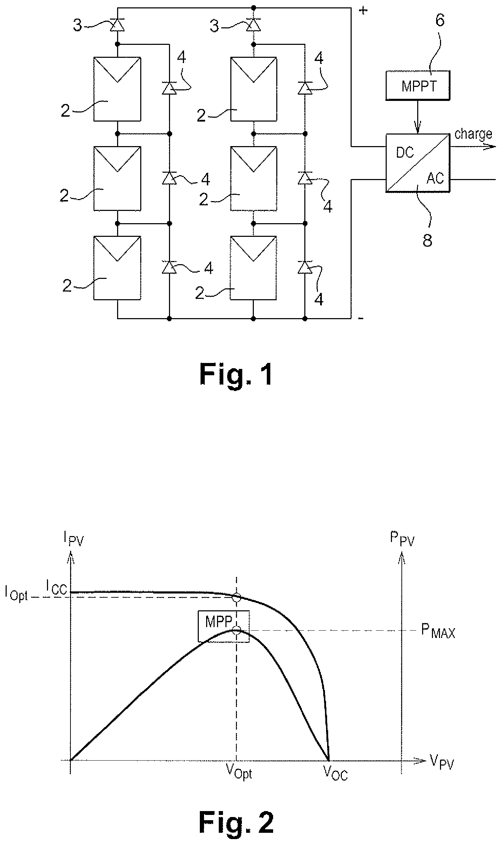

La figure 1 illustre schématiquement un exemple de générateur photovoltaïque. La plupart des générateurs photovoltaïques sont constitués d'au moins un panneau de cellules photovoltaïques connectées en série et/ou en parallèle. On peut connecter plusieurs groupes de cellules en série pour augmenter la tension totale du groupement de cellules ; on peut également connecter plusieurs groupes de cellules en parallèle pour augmenter l'ampérage global du générateur. De la même manière, plusieurs panneaux peuvent être reliés en série et/ou en parallèle pour augmenter la tension et/ou l'ampérage du générateur en fonction de l'application.

La figure 1 illustre un générateur photovoltaïque comprenant deux branches parallèles comprenant chacune trois groupes de cellules 2. Afin de garantir la sécurité électrique du générateur photovoltaïque, des diodes anti-retour 3 et des diodes de dérivation 4 (ou by-pass en terminologie anglaise) sont préconisées. Les diodes anti-retour 3 sont branchées en série sur chaque branche parallèle du générateur afin d'éviter la circulation dans les cellules d'un courant négatif arrivant de l'application ou d'autres branches du générateur. Les diodes de dérivation 4 sont branchées en anti-parallèle sur des groupes 2 de cellules. Les diodes de dérivation 4 permettent de court-circuiter un groupe 2 de cellules présentant une défaillance ou un problème d'ombrage et résolvent le problème de points chauds (ou «hot spot » en terminologie anglaise).

La tension maximale du générateur correspond à la somme des tensions maximales des cellules qui le constituent et le courant maximal que peut délivrer le générateur correspond à la somme des courants maximums des cellules. La tension maximale V_{oc} d'une cellule est atteinte pour une cellule prise à vide, c'est-à-dire pour un courant débité nul (circuit ouvert) et le courant maximal I_{cc} d'une cellule est atteint lorsque ses bornes sont court-circuitées, c'est-à-dire pour une tension nulle aux bornes de la cellule. Les valeurs maximales V_{oc} et I_{cc} dépendent de la technologie et du matériau employés pour réaliser la cellule photovoltaïque. La valeur maximale du courant I_{cc} dépend aussi fortement du niveau d'ensoleillement de la cellule. Une cellule photovoltaïque présente ainsi une caractéristique courant/tension non linéaire et une caractéristique de puissance avec un point de puissance maximal (PPM) qui correspond à des valeurs optimales de tension Vₒₚₜ et de courant Iₒₚₜ. La figure 2 représente les caractéristiques courant-tension I_{PV} et de puissance P_{PV} d'une cellule photovoltaïque avec son point de puissance maximal (MPP). De même, un générateur photovoltaïque présentera une caractéristique courant/tension non linéaire et une caractéristique de puissance avec un point de puissance maximal. Si une partie des cellules est ombragée, ou si une ou plusieurs cellules d'un groupe sont défectueuses, le point de puissance maximal MPP de ce groupe sera déplacé.

Il est connu d'optimiser le fonctionnement d'un générateur photovoltaïque par utilisation d'une commande de recherche du point de puissance maximal (ou MPPT soit Maximum Power Point Tracker en terminologie anglaise). Une telle commande MPPT peut être associée à un convertisseur statique (CS) qui, selon les applications, peut être un convertisseur courant continu - courant alternatif (DC/AC selon l'acronyme utilisé en anglais) ou un convertisseur courant continu - courant continu (DC/DC selon l'acronyme utilisé en anglais). La figure 1 montre ainsi un convertisseur statique 8 DC/AC branché en sortie du générateur et récoltant l'énergie électrique produite par l'ensemble des cellules du générateur pour la délivrer à une charge. Selon les besoins de la charge, le convertisseur peut être amené à augmenter ou abaisser la tension de sortie et/ou à onduler la tension de sortie. La figure 1 montre aussi une commande MPPT 6 associée au convertisseur 8.

La commande MPPT 6 est conçue pour commander le convertisseur 8 afin d'obtenir une tension d'entrée qui corresponde à une valeur optimale de tension Vₒₚₜ, c'est-à-dire correspondant à un point maximal de la caractéristique de puissance. Le point de puissance maximal dépend de plusieurs paramètres variables au cours du temps, notamment l'ensoleillement en présence, la température des cellules ou le nombre de cellules en état de fonctionnement.

De cette manière, le rendement du générateur photovoltaïque n'est pas trop affecté par le dysfonctionnement ou l'ombrage de certaines cellules. Le rendement électrique du générateur dépend directement de l'état de chaque cellule photovoltaïque.

Par exemple, la commande de recherche du point de puissance maximal MPPT peut mettre en oeuvre un algorithme qui identifie l'influence d'un changement de tension sur la puissance délivrée par le générateur et provoque un décalage de la tension dans le sens identifié comme accroissant la puissance. Ainsi, un tel algorithme consiste à mesurer la puissance délivrée par le générateur pour une première tension et, après un certain temps, à imposer une deuxième tension supérieure à la première puis mesurer ou estimer la puissance correspondante. Dans le cas où la puissance correspondant à la seconde tension est supérieure à la puissance correspondant à la première tension, l'étape suivante de l'algorithme est d'imposer une troisième tension encore plus grande. Dans le cas contraire, la troisième tension appliquée est plus faible que la première tension. Ainsi, de proche en proche, le système peut adapter en permanence la tension aux bornes du générateur photovoltaïque afin de se rapprocher le plus possible du point de puissance maximum. Il est entendu que d'autres algorithmes peuvent être mis en oeuvre pour la commande MPPT.

Il existe cependant un besoin pour optimiser la gestion de l'énergie produite par chaque groupe de cellules photovoltaïques d'un générateur, notamment pour adapter au mieux la puissance du générateur aux besoins de la charge et/ou pour pallier efficacement et rapidement aux défaillances et/ou variations d'ensoleillement affectant certaines cellules.

A cet effet, l'invention propose un système de gestion électronique d'un générateur photovoltaïque comprenant une pluralité de microconvertisseurs associés chacun à une ou plusieurs cellules et au moins un module de reconfiguration adapté à gérer les flux d'énergie provenant de chaque microconvertisseur. Le module de reconfiguration peut ainsi, en fonction des besoins de la charge et/ou en fonction de l'état des différents groupes de cellules, modifier le transfert des flux d'énergie. La reconfiguration du transfert des flux d'énergie est commandée par une unité centrale. Il est ainsi possible d'optimiser la production d'énergie électrique du générateur en adaptant la puissance fournie selon les besoins requis et/ou selon l'état de fonctionnement des différentes cellules.

L'invention concerne plus spécifiquement un système de gestion électronique d'un générateur photovoltaïque, le système comprenant :
- une pluralité de microconvertisseurs statiques, chaque microconvertisseur étant connecté électriquement à au moins une cellule photovoltaïque,
- au moins un module de reconfiguration adapté à transmettre des flux d'énergie d'au moins un microconvertisseur vers une charge,
- une unité électronique centrale adaptée à commander une modification des flux d'énergie transmis par ledit au moins un module de reconfiguration.

Selon un mode de réalisation, chaque microconvertisseur est associé à une électronique de gestion adaptée à communiquer avec l'unité électronique centrale. L'électronique de gestion peut mesurer des données électriques en entrée et/ou en sortie du microconvertisseur. L'électronique de gestion peut comprendre une commande de recherche du point de fonctionnement maximal (MPPT). L'électronique de gestion peut comprendre une horloge et/ou un capteur de température.

Selon un mode de réalisation, un micro convertisseur est relié à chaque cellule d'un dispositif photovoltaïque multi-jonctions.

Selon les modes de réalisation, l'unité électronique centrale est adaptée à communiquer avec la charge et/ou avec un réseau extérieur.

Selon un mode de réalisation, le module de reconfiguration comprend une pluralité d'interrupteurs. Selon les modes de réalisation, l'unité électronique centrale est adaptée à commander une mise en série ou en parallèle d'au moins deux microconvertisseurs à travers un module de reconfiguration. L'unité électronique centrale est aussi adaptée à commander une mise en court-circuit ou un contournement d'au moins un microconvertisseur à travers un module de reconfiguration.

L'invention concerne aussi un générateur photovoltaïque comprenant au moins une cellule photovoltaïque et un système de gestion selon l'invention.

D'autres caractéristiques et avantages de l'invention apparaîtront à la lecture de la description qui suit des modes de réalisation de l'invention, donnés à titre d'exemple et en référence aux dessins annexés, qui montrent :
- figure 1, déjà décrite, un schéma d'un générateur photovoltaïque de l'état de la technique ;
- figure 2, déjà décrite, des caractéristiques courant-tension et de puissance théoriques d'une cellule photovoltaïque ;
- figure 3, un schéma d'un exemple de système de gestion électronique selon l'invention, et
- figure 4, un schéma d'un module de reconfiguration du système selon l'invention.

L'invention propose un système de gestion électronique d'un générateur photovoltaïque comprenant une pluralité de cellules photovoltaïques reliées en série et/ou en parallèle. Le système électronique selon l'invention comprend une pluralité de microconvertisseurs statiques. On entend par « microconvertisseur », un convertisseur associé à une cellule photovoltaïque ou associé à un petit groupe de cellules photovoltaïques par opposition à un unique convertisseur de sortie associé à l'ensemble des cellules du générateur. Chaque micro convertisseur est connecté électriquement à au moins une cellule photovoltaïque afin de récolter l'énergie produite par cette cellule et la transférer vers une charge. On appelle « charge » l'application électrique à laquelle est destinée le générateur photovoltaïque.

Le système de gestion de l'invention comporte également une unité électronique centrale qui commande au moins un module de reconfiguration. Un tel module de reconfiguration est adapté à transmettre les puissances de sortie de plusieurs micro convertisseurs vers la charge. L'unité électronique centrale commande chaque module de reconfiguration afin de contrôler la répartition des flux d'énergie provenant de chaque convertisseur en fonction des besoins de la charge et/ou de l'état des cellules du générateur. La gestion de l'énergie produite par chaque cellule photovoltaïque peut donc être optimisée malgré des défaillances de cellules et/ou un vieillissement prématuré de certaines cellules et/ou l'apparition de points chauds.

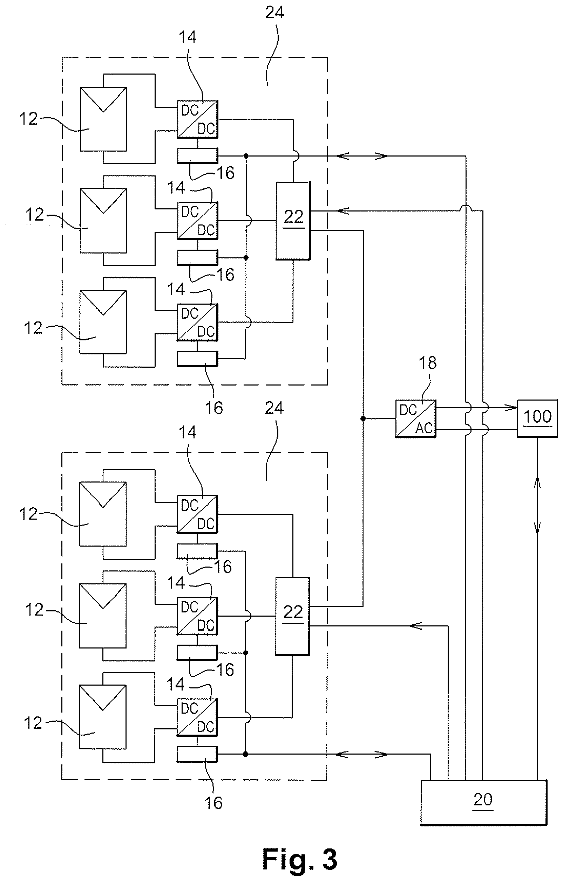

La figure 3 illustre un exemple de système de gestion électronique d'un générateur photovoltaïque selon l'invention. Le système permet d'optimiser la production d'énergie électrique des cellules photovoltaïques.

Le système de gestion selon l'invention comprend une pluralité de microconvertisseurs statiques 14 (DC/DC ou DC/AC) reliés chacun à au moins une cellule photovoltaïque. Dans l'exemple de la figure 3, six microconvertisseurs 14 sont représentés et sont reliés à six groupes de cellules 12 photovoltaïques. Une telle configuration schématique n'est donnée qu'à titre d'illustration étant entendu que le système peut gérer des dizaines ou des centaines de microconvertisseurs 14, chaque microconvertisseur pouvant être associé à une ou plusieurs centaines de cellules 12.

Chaque micro convertisseur 14 peut être associé à une électronique 16 de gestion de l'énergie de la ou des cellules 12 associées au microconvertisseur 14. Une telle électronique 16 peut notamment inclure une commande de recherche du point de puissance maximal MPPT de la ou des cellules 12 photovoltaïques associées. La commande MPPT est adaptée à mettre en oeuvre un algorithme de recherche du point de puissance maximal de la ou des cellules 12 photovoltaïques tel que l'algorithme décrit précédemment par exemple. L'électronique de gestion 16 peut comprendre des capteurs de tension, de courant et de température. Elle peut ainsi mesurer des données électriques (courant et/ou tension) en entrée et/ou en sortie du microconvertisseur 14 auquel elle est associée. Elle peut aussi mesurer la température du panneau. L'électronique de gestion 16 est en communication avec une unité électronique centrale 20 et elle est adaptée à commander une modification du fonctionnement du microconvertisseur 14 auquel elle est associée. L'électronique de gestion 16 peut envoyer ses mesures directement à l'unité centrale 20 ou les traiter directement pour ne signaler que les cas de dysfonctionnement à l'unité centrale. A cet effet, l'électronique de gestion 16 peut comprendre un microcontrôleur ou un circuit logique intégré (FPGA) intégrant des algorithmes de calcul en temps réel. Si l'électronique de gestion 16 intègre une commande MPPT, elle inclut un tel calculateur temps réel qui peut être adapté pour la mise en oeuvre de l'invention.

Sur la figure 3, la pluralité de microconvertisseurs 14 est également reliée à un convertisseur statique 18 de sortie du générateur pour adaptation avec la charge 100. Sur la figure 3 un unique convertisseur de sortie 18 est illustré, mais il est entendu que plusieurs convertisseurs 18 peuvent être placés en série , en parallèle ou en cascade selon la taille et l'architecture du générateur photovoltaïque. Sur l'exemple de la figure 3, le convertisseur de sortie 18 est un convertisseur DC/AC mais il pourrait s'agir d'un convertisseur DC/DC ; le convertisseur 18 peut être élévateur ou abaisseur de tension selon les applications envisagées. Par exemple, le convertisseur 18 permet de disposer en sortie du système d'une puissance électrique combinée ou non avec un signal de type CPL (Courant Porteur de Ligne) qui peut être utilisé dans un réseau électrique.

La connexion de chaque micro convertisseur 14 au convertisseur 18 de sortie est effectuée via des modules de reconfiguration 22 qui constituent des unités d'aiguillage de puissance. Sur la figure 3, un module de reconfiguration 22 est associé à trois micro convertisseurs 14, mais cet exemple est purement illustratif et non limitatif.

Les modules de reconfiguration 22 permettent de gérer les flux d'énergie provenant de chaque microconvertisseur 14 vers le convertisseur 18 de sortie et permettent de reconfigurer les flux d'énergie en fonction d'éventuelles défaillances de certains groupes de cellules 12 et/ou en fonction de besoins en énergie spécifiques de la charge 100. Le module de reconfiguration est commandé par une unité électronique centrale 20.

L'unité centrale 20 peut par exemple être un microcontrôleur. L'unité centrale 20 reçoit des informations depuis chaque électronique de gestion 16 et peut commander chaque module de reconfiguration 22 ainsi que chaque électronique de gestion 16. L'unité centrale 20 peut aussi recevoir des informations depuis la charge 100 - comme par exemple une demande de besoin en énergie spécifique - et elle peut également transmettre des informations à la charge 100 - comme par exemple l'informer d'une coupure d'urgence. L'unité centrale 20 peut également communiquer avec un réseau extérieur - comme par exemple un opérateur électrique pour l'informer d'une défaillance ou de la nécessité d'une maintenance.

Les communications entre l'unité centrale 20 et les autres éléments décrits ci-dessus peuvent être assurées par tout moyen approprié, tels que des câbles réseaux, des courants porteurs de fils (CPL), des protocoles de communication sans fil (WiFi) ou autre. La communication entre l'unité centrale 20 et les électroniques de gestion 16 est bidirectionnelle, ainsi que la communication entre l'unité centrale 20 et la charge 100 et l'unité centrale 20 et le réseau extérieur. En revanche, la communication entre l'unité centrale 20 et les modules de reconfiguration 22 est unidirectionnelle, les modules 22 recevant des commandes de l'unité centrale 20 sans avoir à communiquer d'information eux-mêmes. Chacune de ces communications peut utiliser une technologie et un protocole différents.

A partir des informations reçues par chaque électronique de gestion 16 et/ou par la charge 100, l'unité centrale 20 peut commander chaque module de reconfiguration 22 afin de modifier les flux d'énergie transmis par chaque microconvertisseur 14 en tenant compte des besoins et/ou de l'état de fonctionnement de l'ensemble des cellules et des micro convertisseurs du générateur. L'unité centrale 20 peut aussi commander chaque électronique 16 afin de faire modifier la gestion de chaque microconvertisseur 14 de manière optimale. Notamment, en cas de dysfonctionnement ou de défaillance de certains groupes de cellules, l'unité centrale 20 en a connaissance par les électroniques de gestion 16 associées à chacun de ces groupes et peut commander une reconfiguration des flux d'énergie fournis par chaque autre groupe de cellules.

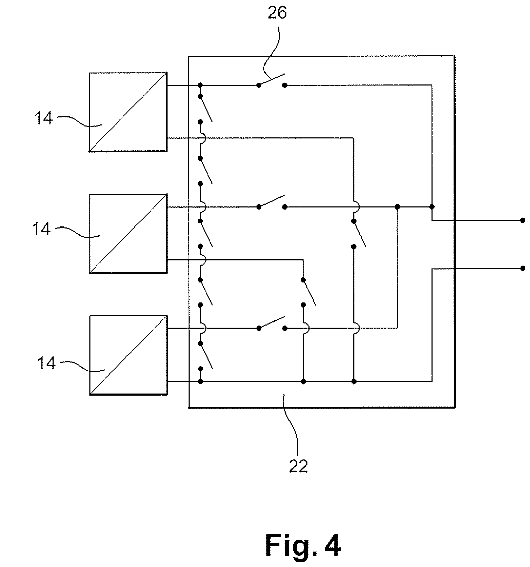

La figure 4 illustre schématiquement des détails d'un module de reconfiguration 22. Sur la figure 4, le module de reconfiguration 22 est associé à trois micro convertisseurs 14 mais il est entendu que cette représentation n'est pas limitative. Le module de reconfiguration 22 présente 2n entrées de puissance, n étant égal au nombre de micro convertisseurs 14 associés au module et 2 sorties de puissance. Le module de reconfiguration 22 reçoit ainsi en entrée les puissances électriques fournies par chaque microconvertisseur 14 et fournit en sortie une puissance multipliée. Le module de reconfiguration 22 comprend une pluralité d'interrupteurs 26 qui sont contrôlés par l'unité électronique centrale 20. Les interrupteurs 26 peuvent être de tout type approprié selon l'électronique mise en oeuvre dans le module 22 et selon le protocole de communication choisi avec l'unité centrale 20 ; on peut par exemple utiliser des transistors ou des circuits logiques programmables (FPGA).

Selon les besoins de la charge, le module de reconfiguration 22 peut fournir une tension importante, avec une mise en série des microconvertisseurs 14, ou fournir un courant important, avec une mise en parallèle des microconvertisseurs 14. La mise en série ou en parallèle des modules est commandée par l'unité électronique centrale 20 qui commande la fermeture et l'ouverture des interrupteurs 26 appropriés. Les besoins de la charge 100 sont connus de l'unité électronique centrale 20, soit par une requête envoyée directement par la charge, soit par un ordre provenant du réseau.

Plusieurs modules de reconfiguration 22 peuvent être agencés en série, comme cela est illustré sur la figure 3 pour permettre une configuration du générateur photovoltaïque dans une gamme de tension importante. De même, plusieurs modules de reconfiguration 22 peuvent être associés en parallèle pour permettre une configuration du générateur photovoltaïque dans une gamme de courant importante.

Le système de gestion électronique selon l'invention permet ainsi de gérer les différents besoins de la charge à laquelle le générateur photovoltaïque est associé, même lorsque ces besoins évoluent dans le temps. Par ailleurs, le système de gestion électronique selon l'invention permet aussi de gérer les situations de dysfonctionnement temporaires ou définitives des éléments du générateur.

En cas de dysfonctionnement d'un groupe de cellules 12 et/ou d'un microconvertisseur 14, le module de reconfiguration 22 peut court-circuiter ou contourner temporairement ou définitivement les entrées de puissance concernées. La mise en court-circuit ou le contournement d'un microconvertisseur 14 sont commandés par l'unité électronique centrale 20 qui commande la fermeture et l'ouverture des interrupteurs 26 appropriés.

Les causes de dysfonctionnement d'un groupe de cellules 12 peuvent être multiples et incluent notamment le vieillissement des cellules 12, un défaut d'ensoleillement ou une défaillance définitive. La multiplicité des causes de dysfonctionnement rend souhaitable une détection de l'état de fonctionnement du groupe de cellules 12 qui soit aisée à réaliser. Un dysfonctionnement d'un groupe de cellules 12 photovoltaïques peut être détecté lors d'une modification de la caractéristique courant-tension en entrée du microconvertisseur 14 par exemple. L'électronique de gestion 16 mesure ces données électriques en entrée du micro convertisseur 14. La mesure peut être faite en continu ou à intervalle régulier.

Un dysfonctionnement d'un micro convertisseur 14 peut être détecté lors d'une modification de sa caractéristique courant-tension. L'électronique de gestion 16 mesure ces données électriques en sortie du micro convertisseur 14. La mesure peut être faite en continu ou à intervalle régulier.

Le système de gestion selon l'invention propose de pallier à ces situations de dysfonctionnement. Comme indiqué plus haut, l'électronique de gestion 16 mesure les courants et tensions en entrée et en sortie du microconvertisseur 14.

Si le produit I_{PV}.V_{PV}, c'est-à-dire la puissance en entrée du microconvertisseur 14, est nul, cela signifie que la ou les cellules 12 associées sont ombragées ou défectueuses. Afin de discriminer entre un ombrage temporaire, un ombrage prolongé et une défaillance définitive, l'électronique de gestion 16 peut inclure une horloge. Si le produit I_{PV}.V_{PV} reste nul pendant un temps inférieur à un premier seuil, l'électronique de gestion 16 conclut à un simple ombrage temporaire et peut gérer cette situation directement en commandant à son micro convertisseur 14 de se placer en court-circuit temporairement. Si le produit I_{PV}.V_{PV} reste nul pendant un temps supérieur à ce premier seuil mais inférieur à un second seuil, l'électronique de gestion 16 conclut à un ombrage prolongé et avertit l'unité centrale. Si le produit I_{PV}.V_{PV} reste nul pendant un temps supérieur au second seuil, l'électronique de gestion 16 conclut à une défaillance définitive du groupe de cellule et avertit l'unité centrale. Bien entendu, les seuils temporels dépendent des applications. On peut aussi choisir de fonctionner avec un seul seuil temporel ou sans aucun seuil.

En cas d'ombrage, l'unité centrale 20 peut commander aux modules 22 une reconfiguration des flux d'énergie en court-circuitant le groupe ombragé et en réorganisant les flux fournis par les microconvertisseurs 14 des groupes de cellules 12 non ombragées. Par exemple, l'unité centrale 20 peut donner instruction à certaines électroniques de gestion 16 de modifier le fonctionnement de leur microconvertisseur 14 associé à des cellules non ombragées. Sur commande de l'unité centrale 20, l'électronique de gestion 16 peut même forcer un microconvertisseur 14 en mode dégradé. En effet, chaque micro convertisseur peut relever ou abaisser la tension fournie par les cellules qui lui sont associées (dans les limites de la tension maximale V_{oc}).

En cas de défaillance définitive d'un groupe de cellules 12, l'électronique de gestion 16 en informe l'unité centrale 20 et peut commander au micro convertisseur 14 de se placer en mode de dérivation. En effet, chaque micro convertisseur 14 peut remplacer les diodes de dérivation ainsi que les diodes anti-retour. Bien entendu, les micro convertisseurs 14 n'excluent pas la présence de diodes de protection classiques comme décrit en référence à la figure 2. L'unité centrale 20, informée de cette défaillance définitive, peut en informer l'opérateur.

Si le produit Iₛ.Vₛ, c'est-à-dire la puissance en sortie du microconvertisseur 14, est nul ou infini, cela signifie que le microconvertisseur 14 est défectueux. L'électronique de gestion 16 en informe l'unité centrale 20 qui commande au module de reconfiguration 22 de court-circuiter les entrées de puissance correspondant au microconvertisseur défaillant. L'unité centrale 20 peut aussi commander une réorganisation des flux d'énergie fournis par les autres microconvertisseurs non défaillants. L'unité centrale 20 peut également informer l'opérateur de cette défaillance.

Le système de gestion électronique selon l'invention peut également inclure des fonctions de sécurité. Par exemple, l'unité centrale 20 peut commander l'arrêt de l'ensemble des microconvertisseurs 14 ainsi que du convertisseur 18. L'unité centrale 20 peut commander un tel arrêt d'urgence sur ordre de la charge 100 ou du réseau extérieur ou d'elle-même à partir des informations qu'elle reçoit des électroniques de gestion 16, comme par exemple une température excessive de plusieurs groupes de cellules 12. Chaque électronique de gestion 16 peut aussi inclure des fonctions de sécurité locales, notamment en cas de surchauffe d'un groupe de cellules 12 ; elle peut alors placer son microconvertisseur 14 en court circuit et en informe l'unité centrale 20.

Le système de gestion électronique selon l'invention peut également inclure une fonction anti-vol. Par exemple, l'unité centrale 20 peut commander l'ouverture de l'ensemble des interrupteurs 26 des modules de reconfiguration 22 si elle est informée d'un déplacement du générateur - par un interrupteur mécanique par exemple. Un code ou un ordre de l'opérateur peut alors être nécessaire pour réactiver les interrupteurs 26 des modules de reconfiguration 22 et permettre à nouveau un transfert d'énergie des cellules photovoltaïques vers une charge 100.

L'unité centrale 20 du système de gestion peut en outre transmettre des informations relatives à l'état de fonctionnement des groupes de cellules 12 et/ou des micro convertisseurs 14 de chaque panneau 24 à un central d'un réseau électrique. Cela permet de faciliter la maintenance des panneaux 24. En particulier, l'opérateur chargé de la maintenance est ainsi averti plus vite d'un dysfonctionnement de certains groupes de cellules 12 photovoltaïques ou de certains microconvertisseurs 14 et peut prendre des mesures en conséquence.

Le système de gestion selon l'invention peut être tout ou partie intégré dans un générateur photovoltaïque. Le générateur peut comprendre plusieurs panneaux 24 ; chaque panneau 24 peut comprendre plusieurs groupes de cellules photovoltaïques reliées en série et/ou en parallèle. Sur le schéma de la figure 3, on a illustré deux panneaux 24 comprenant chacun trois groupes de cellules 12 mais il est entendu que cette représentation n'est pas numériquement limitative.

Selon un mode de réalisation possible, des dispositifs photovoltaïques multi-jonctions peuvent être utilisés. Il devient alors nécessaire de gérer le problème du couplage électrique des différentes jonctions. Un dispositif photovoltaïque multi jonctions, par exemple à jonction tandem, désigne un dispositif photovoltaïque constitué de plusieurs jonctions simples empilées de façon à accroître la zone d'absorption de spectre solaire par le dispositif. Les dispositifs photovoltaïques à jonction tandem permettent d'obtenir un meilleur rendement de conversion électrique. L'inconvénient principal du couplage électrique dans un dispositif photovoltaïque à jonction tandem est la nécessité d'un accord des performances des cellules photovoltaïques constituant le tandem, quelles que soient les conditions d'ensoleillement. Ce cas idéal n'est pas accessible dans la réalité car la production de courant de chaque cellule du tandem est volontairement différente suivant la région du spectre où elles sont actives et varie en fonction des conditions d'ensoleillement. Il en résulte une limitation intrinsèque du dispositif photovoltaïque à jonction tandem par le plus faible de ses éléments. Une telle limitation en courant réduit fortement le rendement théorique d'un dispositif photovoltaïque à jonction tandem. Une solution consiste à découpler électriquement les jonctions d'un dispositif photovoltaïque à jonction tandem. Les cellules photovoltaïques du tandem sont toujours couplées optiquement mais sont découplées électriquement. Chaque jonction est alors associée à deux électrodes électriques ; on obtient ainsi un dispositif photovoltaïque à quatre électrodes (dans le cas d'un tandem). En reliant un microconvertisseur 14 à chaque cellule photovoltaïque du tandem, le système permet d'obtenir un dispositif photovoltaïque multi-jonctions fonctionnant avec des cellules photovoltaïques découplées électriquement et gérées chacune de manière optimale via les modules de reconfiguration 22.

L'invention vient d'être décrite en référence à des exemples illustrés sur les figures annexées. Il est cependant entendu que cette description n'est pas limitative. Notamment, le nombre et l'agencement des groupes de cellules 12, des microconvertisseurs 14 et des modules de reconfiguration 22 dépendent des applications envisagées et de l'architecture du générateur photovoltaïque. Les algorithmes utilisés dans les commandes MPPT qui pourraient être incluses dans les électroniques de gestion 16 peuvent être n'importe quel algorithme existant ou qui serait développé ultérieurement et chaque électronique 16 peut ne pas avoir le même algorithme mis en oeuvre. De même, les protocoles de communication utilisés entre l'unité centrale 20 et les éléments du système ou un réseau extérieur peuvent être adaptés en fonction des technologies disponibles.

## Revendications

1. Procédé de gestion électronique d'un générateur photovoltaïque comprenant un système de gestion électronique d'un générateur photovoltaïque, le système comprenant :
- une pluralité de microconvertisseurs (14) statiques, chaque microconvertisseur (14) étant connecté électriquement à au moins une cellule (12) photovoltaïque, la ou les cellules formant une partie de l'ensemble des cellules du générateur,
- au moins un module (22) de reconfiguration recevant en entrée des puissances électriques fournies par des microconvertisseurs et comprenant une pluralité d'interrupteurs (26), le module (22) de reconfiguration étant adapté à transmettre des flux d'énergie desdits microconvertisseurs (14) vers une charge (100),
- une unité (20) électronique centrale adaptée à commander une modification des flux d'énergie transmis par une commande d'ouverture ou de fermeture des interrupteurs (26) appropriés du module de reconfiguration (22),
dans lequel il comporte une étape dans laquelle, en cas de dysfonctionnement ou de défaillance d'au moins une cellule (12) photovoltaïque, l'unité (20) électronique centrale commande l'ouverture ou la fermeture d'interrupteurs (26) appropriés du module (22) de reconfiguration pour mettre en court-circuit ou contourner le au moins un microconvertisseur (14) associé à la au moins une cellule (12) photovoltaïque dysfonctionnant ou défaillante.

2. Procédé de gestion selon la revendication 1, **caractérisé en ce qu'**un microconvertisseur (14) est placé en court-circuit temporairement si la puissance en son entrée est nulle.

3. Procédé de gestion selon la revendication 1, ou 2, **caractérisé en ce qu'**en cas de surchauffe détectée d'au moins une cellule (12) photovoltaïque, le au moins un microconvertisseur (14) associé est mis en court-circuit.

4. Système de gestion électronique d'un générateur photovoltaïque, le système comprenant :
- une pluralité de microconvertisseurs (14) statiques, chaque microconvertisseur (14) étant connectable électriquement à au moins une cellule (12) photovoltaïque, la ou les cellules formant une partie de l'ensemble des cellules du générateur,
- au moins un module (22) de reconfiguration recevant en entrée des puissances électriques fournies par des microconvertisseurs et comprenant une pluralité d'interrupteurs (26), le module (22) de reconfiguration étant adapté à transmettre des flux d'énergie desdits microconvertisseurs (14) vers une charge (100),
- une unité (20) électronique centrale adaptée à commander une modification des flux d'énergie transmis par une commande d'ouverture ou de fermeture des interrupteurs (26) appropriés par le module de reconfiguration (22),
dans lequel l'unité (20) électronique centrale est configurée pour commander l'ouverture ou la fermeture d'interrupteurs (26) appropriés du module (22) de reconfiguration en cas de défaillance d'au moins une cellule (12) photovoltaïque pour mettre en court-circuit ou contourner le au moins un microconvertisseur (14) associé à la au moins une cellule (12) photovoltaïque dysfonctionnant ou défaillante.

5. Générateur photovoltaïque, comprenant :
le système de gestion selon la revendication 4; et une pluralité de cellule photovoltaïques, chaque microconvertisseur statique du système selon la revendication 4 étant connecté électriquement à au moins une des cellules photovoltaïques.

## Patentansprüche

1. Elektronisches Verwaltungsverfahren für einen Photovoltaikgenerator, das ein elektronisches Verwaltungssystem für einen Photovoltaikgenerator umfasst, wobei das System umfasst:
- eine Vielzahl von statischen Mikroumrichtern (14), wobei jeder Mikroumrichter (14) mit mindestens einer Photovoltaikzelle (12) elektrisch verbunden ist, wobei die Zelle oder die Zellen einen Teil der Gesamtheit der Zellen des Generators bilden,
- mindestens ein Umkonfigurationsmodul (22), das im Eingang elektrische Leistungen erhält, die von Mikroumrichtern abgegeben werden, und eine Vielzahl von Schaltern (26) umfasst, wobei das Umkonfigurationsmodul (22) geeignet ist, Energieströme der Mikroumrichter (14) zu einer Last (100) zu übertragen,
- eine elektronische Zentraleinheit (20), die geeignet ist, eine Änderung der übertragenen Energieströme durch einen Befehl zum Öffnen oder Schließen der entsprechenden Schalter (26) des Umkonfigurationsmoduls (22) zu steuern,
wobei es einen Schritt umfasst, bei dem im Fall einer Störung oder eines Ausfalls mindestsens einer Photovoltaikzelle (12) die elektronische Zentraleinheit (20) das Öffnen oder das Schließen von entsprechenden Schaltern (26) des Umkonfigurationsmoduls (22) steuert, um den mindestens einen Mikroumrichter (14), welcher der mindestens einen gestörten oder ausgefallenen Photovoltaikzelle (12) zugeordnet ist, kurzzuschließen oder zu umgehen.

2. Verwaltungsverfahren nach Anspruch 1, **dadurch gekennzeichnet, dass** ein Mikroumrichter (14) vorübergehend kurzgeschlossen wird, wenn die Leistung in seinem Eingang null ist.

3. Verwaltungsverfahren nach Anspruch 1 oder 2, **dadurch gekennzeichnet, dass** im Fall einer festgestellten Überhitzung mindestens einer Photovoltaikzelle (12) der mindestens eine zugeordnete Mikroumrichter (14) kurzgeschlossen wird.

4. Elektronisches Verwaltungssystem für einen Photovoltaikgenerator, wobei das System umfasst:
- eine Vielzahl von statischen Mikroumrichtern (14), wobei jeder Mikroumrichter (14) mit mindestens einer Photovoltaikzelle (12) elektrisch verbindbar ist, wobei die Zelle oder die Zellen einen Teil der Gesamtheit der Zellen des Generators bilden,
- mindestens ein Umkonfigurationsmodul (22), das im Eingang elektrische Leistungen erhält, die von Mikroumrichtern abgegeben werden, und eine Vielzahl von Schaltern (26) umfasst, wobei das Umkonfigurationsmodul (22) geeignet ist, Energieströme der Mikroumrichter (14) zu einer Last (100) zu übertragen,
- eine elektronische Zentraleinheit (20), die geeignet ist, eine Änderung der übertragenen Energieströme durch einen Befehl zum Öffnen oder Schließen der entsprechenden Schalter (26) durch das Umkonfigurationsmodul (22) zu steuern,
wobei die elektronische Zentraleinheit (20) dazu konfiguriert ist, das Öffnen oder das Schließen von entsprechenden Schaltern (26) des Umkonfigurationsmoduls (22) im Fall des Ausfalls mindestens einer Photovoltaikzelle (12) zu steuern, um den mindestens einen Mikroumrichter (14), welcher der mindestens einen gestörten oder ausgefallenen Photovoltaikzelle (12) zugeordnet ist, kurzzuschließen oder zu umgehen.

5. Photovoltaikgenerator, umfassend:
das Verwaltungssystem nach Anspruch 4; und eine Vielzahl von Photovoltaikzellen, wobei jeder statische Mikroumrichter des Systems nach Anspruch 4 mit mindestens einer der Photovoltaikzellen elektrisch verbunden ist.

## Claims

1. Method for electronically managing a photovoltaic generator comprising a system for electronically managing a photovoltaic generator, the system comprising:
- a plurality of solid-state micro-converters (14), each micro-converter (14) being electrically connected to at least one photovoltaic cell (12), the one or more cells forming a portion of the overall assembly of cells of the generator;
- at least one reconfiguration module (22) receiving, as input, electric powers delivered by micro-converters and comprising a plurality of switches (26), the reconfiguration module (22) being capable of transmitting energy flows from said micro-converters (14) to a load (100);
- a central electronic unit (20) suitable for controlling the transmitted energy flows so that they are modified by controlling the appropriate switches (26) of the reconfiguration module (22) so that they open or close,
wherein the method includes a step in which, in the event of a malfunction or fault in at least one photovoltaic cell (12), the central electronic unit (20) controls the appropriate switches (26) of the reconfiguration module (22) so that they open or close in order to short or to bypass the at least one micro-converter (14) associated with the at least one malfunctioning or faulty photovoltaic cell (12).

2. Management method according to Claim 1, **characterized in that** a micro-converter (14) is temporarily shorted if the power at its input is zero.

3. Management method according to Claim 1 or 2, **characterized in that** in the event of overheating of at least one photovoltaic cell (12) is detected, the at least one associated micro-converter (14) is shorted.

4. System for electronically managing a photovoltaic generator, the system comprising:
- a plurality of solid-state micro-converters (14), each micro-converter (14) being able to be electrically connected to at least one photovoltaic cell (12), the one or more cells forming a portion of the overall assembly of cells of the generator;
- at least one reconfiguration module (22) receiving, as input, electric powers delivered by micro-converters and comprising a plurality of switches (26), the reconfiguration module (22) being capable of transmitting energy flows from said micro-converters (14) to a load (100);
- a central electronic unit (20) suitable for controlling the transmitted energy flows so that they are modified by controlling the appropriate switches (26) of the reconfiguration module (22) so that they open or close,
wherein the central electronic unit (20) is configured to control the appropriate switches (26) of the reconfiguration module (22) in the event of a fault in at least one photovoltaic cell (12) so that they open or close in order to short or to bypass the at least one micro-converter (14) associated with the at least one malfunctioning or faulty photovoltaic cell (12).

5. Photovoltaic generator, comprising:
the management system according to Claim 4; and a plurality of photovoltaic cells, each solid-state micro-converter of the system according to Claim 4 being electrically connected to at least one of the photovoltaic cells.
